(19)

Europäisches
Patentamt
European
Patent Office
Office européen
des brevets

(11) **EP 4 615 160 A1**

(12) **EUROPEAN PATENT APPLICATION**

(43) Date of publication:
**10.09.2025 Bulletin 2025/37**

(21) Application number: **24223574.5**

(22) Date of filing: **28.12.2024**

(51) International Patent Classification (IPC):
**H05B 3/06** (2006.01)   **H05B 3/26** (2006.01)
**H05B 3/28** (2006.01)

(52) Cooperative Patent Classification (CPC):
**H05B 3/06; H05B 3/26; H05B 3/28; H05B 3/283**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.03.2024 US 202418599456**

(71) Applicant: **Design & Technical Solutions LLC Wantagh, NY 11793 (US)**

(72) Inventor: **JANG, Sunghoon Glen Rock NJ, 07452 (US)**

(74) Representative: **Lorente Berges, Ana A2 Estudio Legal C/ Maria de Molina n° 41 28006 Madrid (ES)**

(54) **SMART TILE WITH EMBEDDED ELECTRIC HEATING COIL**

(57)   An electric heating tile is provided. An electric heating tile according to an embodiment of the present disclosure includes a first layer in which a copper pipe is provided, a second layer provided on the first layer and patterned with at least one copper film, a top cover covering an upper surface of the second layer, and a bottom cover covering a lower surface of the first layer, in which in the top cover and the bottom lower cover, at least one magnetic member is attached to one side surface.

【FIG. 1】

100

# EP 4 615 160 A1

**Description**

**BACKGROUND**

Field

The present disclosure relates to an electric heating tile containing a copper pipe inside the electric heating tile, and more specifically, an electric heating tile in which a layer consisting of a copper pipe and a copper film is mounted inside the tile and heat is emitted from an upper surface of the tile by a heating cable inserted inside the copper pipe.

Related Art

In general, plate-shaped interior materials made of tile, wood, metal synthetic resin, and the like are attached to interior walls of buildings to decorate the designated space.

Most of these architectural interior materials have the problem of being heavy, and most of them are used only as simple architectural interior materials that are designed to have only a nice appearance but do not give any functionality.

Meanwhile, heating inside a building is divided into two heating types such as ventilation heating, which heats cold air into warm air using an electric heater and blows the heated air into the room, and radiant heating, which heats a floor or wall and warms the room by radiation from the floor or wall.

In particular, the radiant heating is mainly used today because heating efficiency thereof is relatively good, and a heating method of the radiant heating includes a method of heating the floor or wall by guiding hot water through a pipe under the floor or behind the wall, and a method of heating the floor or wall by embedding an electric wire in the floor or wall.

Here, the hot water heating type is gradually being replaced by the electric wire heating type because there is a risk of water leaking when the pipe rots or is damaged.

However, even in the case of the electric wire heating type, a series of complex construction steps are required as follows. That is, before constructing the floor or wall, the electric wire is first laid on the floor or wall, then cement is poured, and after the cement has hardened and dried, decorative or other surface tiles should be further placed on the upper surface of the cement and fixed thereto. Accordingly, the electric wire heating type disadvantages of requiring a lot of labor, high construction costs, and generating a lot of electromagnetic waves that are harmful to the human body.

To compensate for these shortcomings, floor heating using planar heating elements or linear heating elements, generate less electromagnetic waves and can easily transfer heat, is being used.

In particular, in the construction of floor heating using a planar heating element, an insulating material is laid on the floor to be heated and then applied.

However, since the planar heating element has weak strength, the planar heating element is easily damaged by external impact. Moreover, the planar heating element is weak against moisture, fire may occur due to electric leakage, and when the planar heating element is partially damaged, repair is difficult.

Meanwhile, Korean Patent Publication No. 10-2015-0099894 describes a heating block having a structure in which an upper surface of a square block base where a cover fitting groove and a heating wire fitting groove are formed is covered with a heat-conducting solution or heat-conducting paste, a heating wire is inserted into the heating wire fitting groove, and the cover fitting groove is covered with a cover.

However, in the case of the prior art, since a heating wire and a heat-conducting solution (or heat-conducting paste) are used as a heating medium, it is difficult to secure a sufficient connection area between them, which causes problems such as poor connection and spark generation. Therefore, there are problems in terms of safety as well as decreased functionality.

In addition, in order to insert the heating wire into the square block base, there is a disadvantage in terms of manufacturability and workability that the heating wire should be installed after machining a heating wire fitting groove on the upper surface of the square block base.

Therefore, in order to solve the above problems, there is a need for research on electric heating tiles that are easy to construct and repair, and can be used safely from accidents such as fire.

**SUMMARY**

An object of the present disclosure is to provide an electric heating tile capable of more easily releasing heat generated by a heating cable through an upper surface of the tile by providing a copper pipe, which is made of copper, into which a heating cable such as an electric heating wire is inserted, and a copper film formed above the copper pipe inside the tile.

In addition, an object of the present disclosure is to provide an electric heating tile capable of easily installing and maintaining the tile through coupling by a magnet by providing at least one magnetic member on one side surface.

In addition, an object of the present disclosure is to provide an electric heating tile capable of measuring a temperature of a copper pipe and safely controlling a heating state of an electric heating tile by including a control module electrically connected to the electric heating tile.

The problems that the present disclosure aims to solve are not limited to the problems mentioned above, and other problems that the present disclosure aims to solve that are not mentioned here will be clearly understood by those skilled in the art in the technical field to which the present disclosure belongs from the description below.

According to an aspect of the present disclosure, there is provided an electric heating tile including: a first layer in which a copper pipe is provided; a second layer provided on the first layer and patterned with at least one copper film; a top cover configured to cover an upper surface of the second layer; and a bottom cover configured to cover a lower surface of the first layer, in which in the top cover and the bottom lower cover, at least one magnetic member is attached to one side surface.

The bottom cover may include a first inlet provided on one side surface, a second inlet provided on the other side surface facing the first inlet, and an insertion member inserted into the first inlet and the second inlet, and the insertion member may be made of an elastic material and provided in a tubular shape with a through hole penetrating the inside, and the copper pipe may be inserted into the through hole.

The electric heating tile may further include a control module configured to control a heating state of the copper pipe, in which the control module may include a temperature sensor configured to measure a temperature of the top cover, a power supply unit configured to supply power to a heating cable inserted into the copper pipe, a communication unit configured to receive a user control signal from a predetermined user terminal, and a temperature control unit configured to control a heating temperature of the copper pipe based on the user control signal received from the communication unit.

The copper pipe of the first layer may be made of the same material as that of the copper film of the second layer, and the copper pipe and the copper film may be joined by soldering, and in the bottom cover, a region where the first layer is mounted may be coated with epoxy.

The electric heating tile may further include a side surface cover having the same thickness as a combined thickness of the bottom cover and the top cover, including an empty space formed therein, and having at least one through hole on one side surface.

According to the present disclosure, by a heating cable through an upper surface of the tile by providing the copper pipe, which is made of copper, into which the heating cable such as the electric heating wire is inserted, and the copper film inside the tile, it is possible to more easily release heat generated by a heating cable through an upper surface of the tile.

In addition, by providing at least one magnetic member on one side surface, it is possible to easily install and maintain the tile through coupling by the magnet.

In addition, by including the control module electrically connected to the electric heating tile, it is possible to measure the temperature of the copper pipe and safely control the heating state of an electric heating tile.

## BRIEF DESCRIPTION OF THE DRAWINGS

FIG. 1 is a configuration diagram of an electric heating tile according to one embodiment of the present disclosure.

FIG. 2 is a diagram for describing a first layer of the electric heating tile according to one embodiment of the present disclosure.

FIG. 3 is a diagram for describing a second layer of the electric heating tile according to one embodiment of the present disclosure.

FIG. 4 is a diagram for describing the combination of the first layer and the second layer of the electric heating tile according to one embodiment of the present disclosure.

FIGS. 5 to 7 are drawings to describe a top cover and a bottom cover of the electric heating tile according to one embodiment of the present disclosure.

FIG. 8 is a diagram for describing a control module of the electric heating tile according to one embodiment of the present disclosure.

FIG. 9 is a drawing to describe a side surface cover of the electric heating tile according to one embodiment of the present disclosure.

FIGS. 10 and 11 are diagrams for describing a fault diagnosis unit provided in the control module of the electric heating tile according to one embodiment of the present disclosure.

## DESCRIPTION OF EXEMPLARY EMBODIMENTS

Specific details, including the problem to be solved, means of solving the problem, and effect of the invention regarding the present disclosure as described above, are included in the examples and drawings described below. The advantages and features of the present disclosure, and how to achieve them, will become clear by referring to the embodiments described in detail below along with the accompanying drawings.

The scope of rights of the present disclosure is not limited to the examples described below, and may be modified and implemented in various ways by those with ordinary knowledge in the technical field within the scope of the technical gist of the present disclosure.

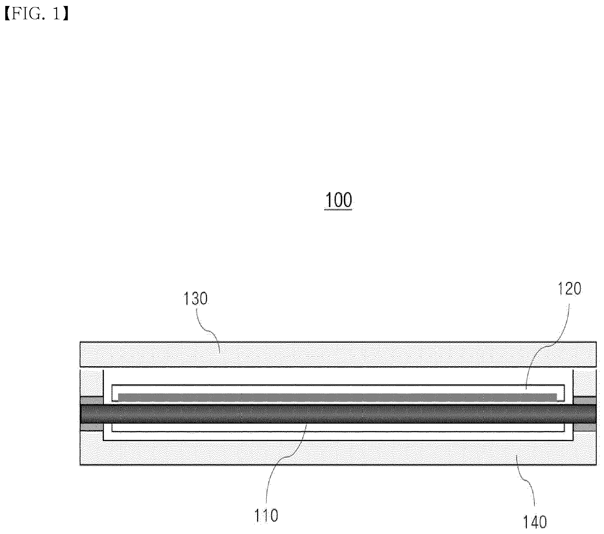

Hereinafter, the title of the invention in the present disclosure will be explained in detail with reference to the attached FIG. 1.

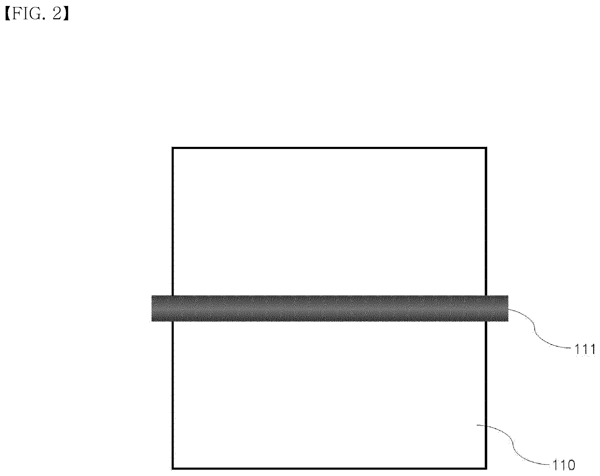

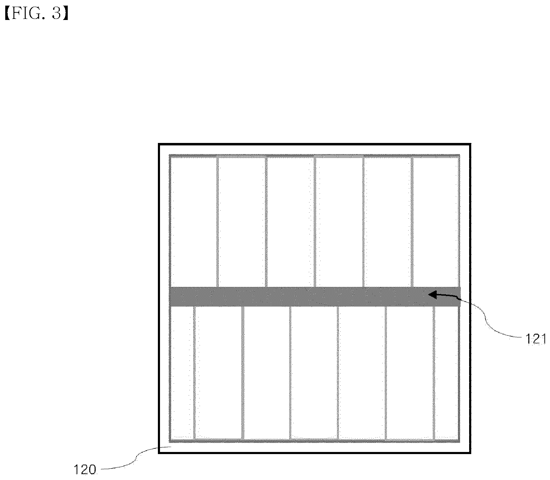

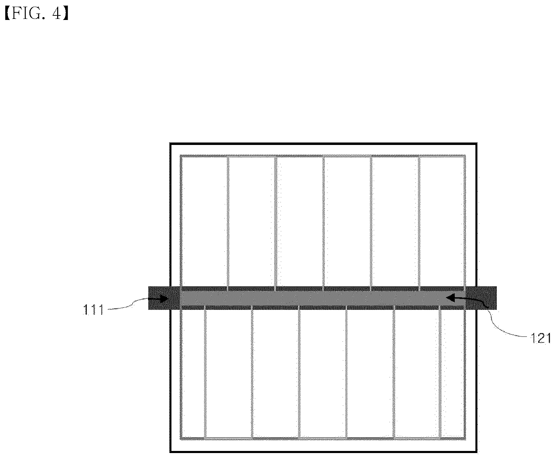

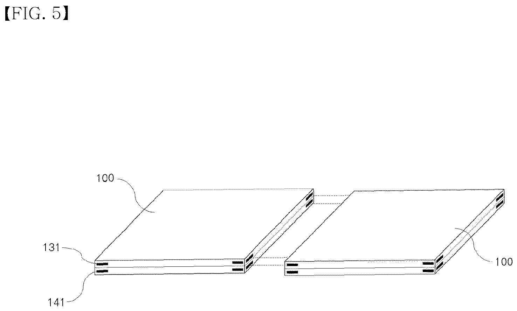

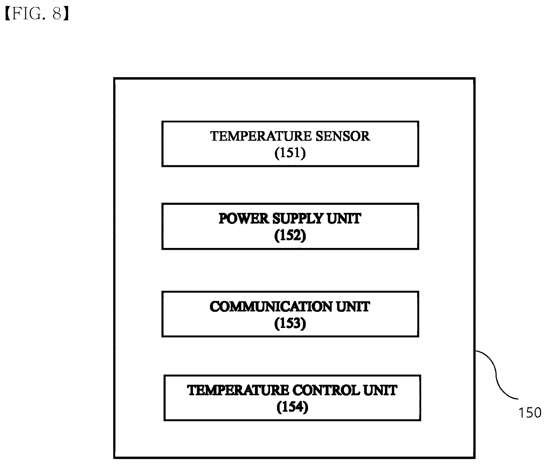

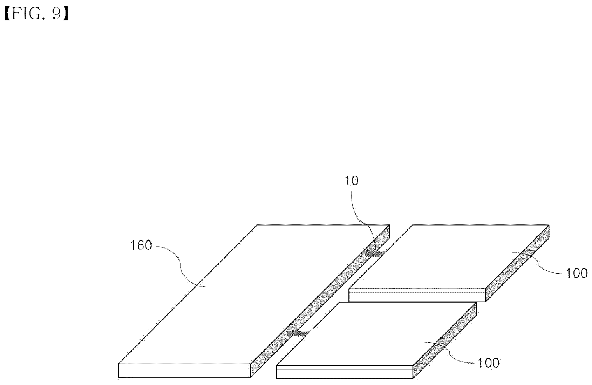

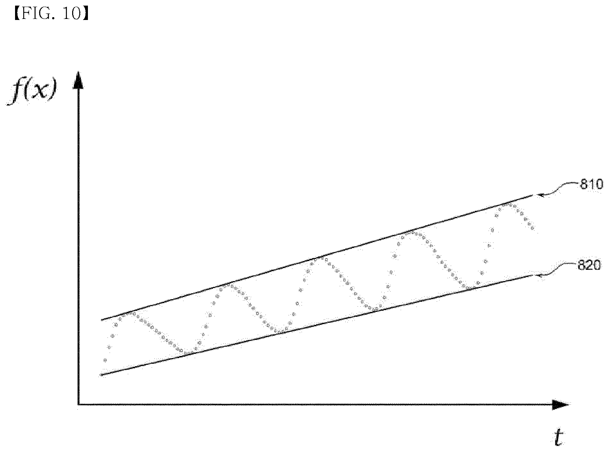

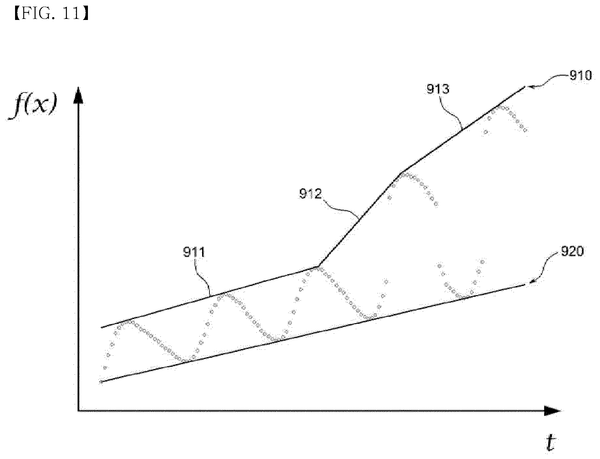

FIG. 1 is a configuration diagram of an electric heating tile according to one embodiment of the present disclosure, FIG. 2 is a diagram for describing a first layer of the electric heating tile according to one embodiment of the present disclosure, FIG. 3 is a diagram for describing a second layer of the electric heating tile according to one embodiment of the present disclosure, FIG. 4 is a diagram for describing the combination of the first layer and the second layer of the electric heating tile according to one embodiment of the present disclosure, FIGS. 5 to 7 are drawings to describe a top cover and a bottom cover of the electric heating tile according to one embodiment of the present disclosure, FIG. 8 is a diagram for describing a control module of the electric heating tile according to one embodiment of the present disclosure, FIG. 9 is a drawing to describe a side surface cover of the electric heating tile according to one embodiment of the present disclosure, and FIGS. 10 and 11 are diagrams for describing a fault diagnosis unit provided in the control module of the electric heating tile according to one embodiment of the present disclosure.

<First Embodiment>

Referring to FIGS. 1 to 4, an electric heating tile 100 according to one embodiment of the present disclosure may include on a first layer 110 on which a copper pipe 111 is provided, a second layer 120 which is provided on the first layer 110 and patterned with at least one copper film 121, a top cover 130 covering an upper surface of the second layer 120, and a bottom cover 140 covering a lower surface of the first layer 110.

For example, the top cover 130 may be made of various materials such as ceramic, wood, and synthetic resin, and the bottom cover may be made of a synthetic resin material such as PVC.

For example, an air gap is provided between the first layer 110 and the top cover 130 may be less than a preset maximum thickness (for example, 10 mm).

As another example, the pattern of the copper film 121 may be determined to correspond to the size and shape of the top cover 130.

Meanwhile, referring to FIG. 5, the top cover 130 and the bottom cover 140 may be provided with at least one magnetic member 131 and 141 on one side surface.

Therefore, the electric heating tile 100 can be modularly combined by the magnetic members 131 and 141, the electric heating tile 100 can be constructed for the entire region, and the electric heating tile 100 may be partially placed in a region requiring a construction.

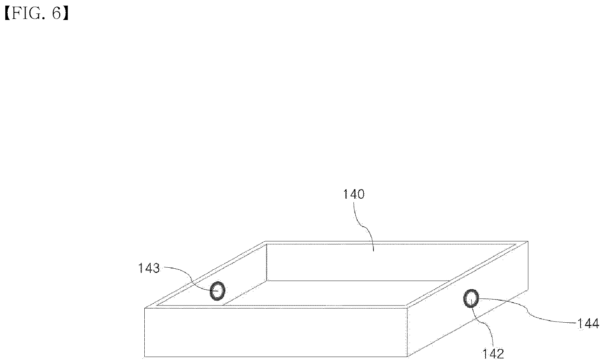

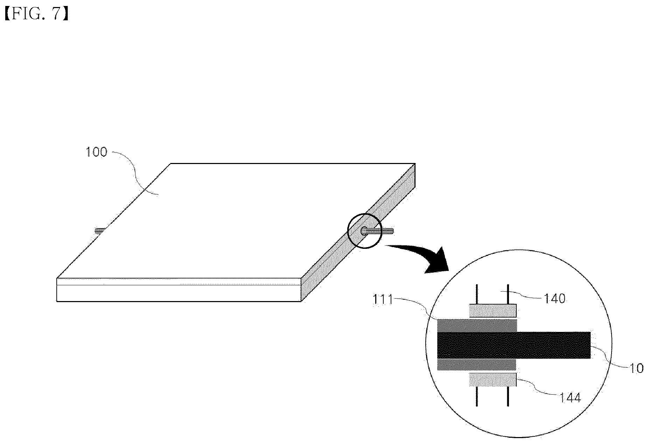

Meanwhile, referring to FIGS. 6 and 7, the bottom cover 140 may include a first inlet 142 provided on one side surface, a second inlet 143 provided on the other side surface facing the first inlet 142, and an insertion member 144 inserted into the first inlet 142 and the second inlet 143.

At this time, the insertion member 144 is made of an elastic material and is provided in a tubular shape with a through hole penetrating the inside, and the copper pipe 111 can be inserted into the through hole.

Preferably, the insertion member 144 may be made of silicon material.

Therefore, both ends of the copper pipe 111 provided in the first layer 110 can be protected by the insertion member 144, and movement of the copper pipe 111 can be minimized.

In this case, a heating cable 10 may be inserted into the copper pipe 111, and the heat generated by the heating cable 10 may be released to the top cover 130 through the copper pipe 111 of the first layer 110 and the copper film 121 of the second layer 120.

Meanwhile, as illustrated in FIG. 8, the electric heating tile 100 may further include a control module 150 that controls the heating state of the copper pipe 111.

More specifically, the control module 150 may include a temperature sensor 151 that measures the temperature of the top cover 130, a power supply unit 152 configured to supply power to the heating cable 10 inserted into the copper pipe 111, a communication unit 153 configured to receive a user control signal from a predetermined user terminal, and a temperature control unit 154 configured to control a heating temperature of the copper pipe 111 based on the user control signal received from the communication unit 153.

For example, the user control signal may include a heating reservation time, a maximum heating temperature, a minimum heating temperature, or the like.

Therefore, the temperature control unit 154 controls the heating state of the heating cable 10 by adjusting the magnitude and duty rate of the voltage applied to the heating cable 10 based on the user control signal.

Meanwhile, the copper pipe 111 of the first layer 110 is made of the same material as the copper film 121 of the second layer 120, and the copper pipe 111 and the copper film 121 may be joined by soldering.

Additionally, in the bottom cover 140, a region where the first layer 110 is mounted may be coated with an epoxy resin.

More specifically, an epoxy resin, or the like may be applied to an inner surface of the bottom cover 140 at a preset thickness (for example, 10 mm), and heat generated from the lower surface of the bottom cover 140 can be blocked by the epoxy resin.

That is, by applying an epoxy resin, or the like to the inner surface of the bottom cover 140, the temperature of the copper pipe 111 and the copper film 121 can be prevented from being affected by the heat rising from the bottom of the bottom cover 140, and the heat generated from the heating cable 10 inserted inside the copper pipe 111 can be released through the top cover 130.

Additionally, when the heating temperature of the copper pipe is input through the control module 150, heat loss due to cold floor air, or the like can be minimized.

Meanwhile, as illustrated in FIG. 9, the electric heating tile may further include a side surface cover 160 having the same thickness as a combined thickness of the bottom cover 140 and the top cover 130, including an empty space formed therein, and having at least one through hole on one side surface.

The heating cable 10 penetrating the first inlet 142 and the second inlet 143 of the bottom cover 140 may be inserted through the through hole provided in the side surface cover 160.

In other words, the tile construction can be completed by arranging the side surface cover (160) along the outer edge of the area where heat is supplied by the electric heating tile 100.

At this time, the side surface cover 160 may include at least one cutting line in horizontal and vertical directions, and the side surface cover 160 may be cut according to the shape of the floor.

For example, the side surface cover 160 may be made of plastic.

As another example, a thermally conductive sheet is attached to the side surface of the top cover 130 to induce rapid heat conduction between the electric heating tiles 100 when multiple electric heating tiles 100 are combined.

<Second Embodiment>

Meanwhile, the control module 150 may further include a fault diagnosis unit (not illustrated) that analyzes temperature data (sensor output data) collected through the temperature sensor 151.

The failure diagnosis unit (not illustrated) may analyze the sensor output data in real time and determine that a failure has occurred in the temperature sensor 151 when an instantaneous change rate of the sensor output data is equal to or greater than a preset value.

For this purpose, in the first embodiment, the instantaneous rate of change Rchange of the sensor output data is calculated, and when the instantaneous rate of change Rchange is greater than the preset limit value Serr, it can be determined that an error has occurred in the real-time output data of the sensor (for example, due to a failure of the sensor itself).

The instantaneous rate of change Rchange of the sensor output data can be calculated through a differential value f'(x) of a function f(x) that represents the characteristics of the sensor as illustrated in [Mathematical Expression 1] below.

[Mathematical Expression 1]

$$R_{change} = f'(x) = \lim_{\Delta t \to 0} \left( \frac{f(x + \Delta t) - f(x)}{\Delta t} \right)$$

Here, Rchange refers to the instantaneous change rate of the sensor output data, and $\Delta t$ refers to the time change.

In the second embodiment, it can be determined that the sensor failure occurs only a case where the instantaneous rate of the sensor calculated in [Mathematical Expression 1] is greater than the preset limit value Serr is equal to or more than a preset number of times during the preset period. In other words, since it is difficult to determine a sensor failure in a one-off case with a high instantaneous rate, in order to improve the accuracy of sensor failure determination, the standard can be set to determine that a sensor failure occurs only when the number of failures exceeds a preset number of times during a preset period.

In the third embodiment, it can be determined that the sensor failure occurs only when the accumulated number of times the instantaneous change rate of the sensor calculated in [Mathematical Expression 1] is greater than the preset limit value Serr is greater than the preset number. Similar to the second embodiment above, since it is difficult to determine the sensor failure in a one-off case with a high instantaneous rate, in order to improve the accuracy of sensor failure determination, the standard can be set to determine that a sensor failure occurs only when the number of failures exceeds a preset number of times during a preset period.

In a fourth embodiment, when the instantaneous change rate of the sensor calculated in [Mathematical Expression 1] changes rapidly, it can be determined that the sensor has failed.

To this end, f'(x) calculated in [Mathematical Expression 1] is differentiated again to calculate f''(x), and when the calculated value is greater than a preset value, it can be determined that a failure has occurred in the sensor.

Meanwhile, in a fifth embodiment, even when it is determined that a failure has occurred in the sensor through any one of the first to fourth embodiments, the sensor failure is not immediately confirmed, and the sensor failure may be confirmed when the "unexpected data generation conditions" described below are simultaneously satisfied.

Here, in the unexpected data generation conditions, slopes of upper limit straight lines 810 and 910 connecting the upper limit values of the sensor output data and lower limit straight lines 820 and 920 connecting the lower limit values of the sensor output data are calculated as illustrated in FIGS. 10 and 11, and when the slope difference calculated in [Mathematical Expression 2] above is equal to or greater than a preset value, it can be determined that unexpected data has occurred.

Therefore, when it is determined that a failure has occurred in the sensor through any one of the first to fourth embodiments and the slope difference Idiff calculated in [Mathematical Expression 2] is equal to or greater than a preset value to satisfy the unexpected data generation condition, it can be set to confirm sensor failure.

[Mathematical Expression 2]

$$I_{diff} = \left| I_{max} - I_{min} \right|$$

Here, $I_{max}$ means the slope of the upper limit straight line connecting the upper limits of the sensor output data, $I_{min}$ means the slope of the lower limit straight line connecting the lower limits of the sensor output data, and $I_{diff}$ means the slope difference (absolute value).

More specifically, as illustrated in FIGS. 10 and 11, the sensor data is collected at regular intervals, and the slopes of the upper limit straight line 810 connecting the upper end of the collected data and the lower limit straight line 820 connecting the lower end are calculated, respectively. Thereafter, the slope difference $I_{diff}$ of the two straight lines is calculated, and when the difference is not large (less than the preset value), the sensor data is considered to be moving within the error range and it is determined that the sensor is operated normally. Moreover, when the slope difference Idiff between the two straight lines becomes larger than the preset value, it can be determined that the sensor has failed, as inaccurate values are being output due to the sensor failure.

That is, in the case of FIG. 10, the slope of the upper limit straight line 810 is 0.26 and the slope of the lower limit straight line 820 is 0.24, and thus, the slope difference Idiff between the two straight lines is 0.02, which is smaller than the preset reference value of 0.12, and it can be determined that the sensor is operated normally.

Meanwhile, when the upper limit straight line or lower limit straight line appears as a bent line, the slope may be compared by dividing the region for each section where the straight line is bent, or the slope may be compared by calculating the average slope within a certain period.

Referring to FIG. 11, first, a case where the slope is compared by dividing the region at each section where the straight line bends will be described. In FIG. 11, the upper limit straight line 910 includes three straight lines, and in the three straight lines, a first straight line 911 has a slope of 0.26, a second straight line 912 has a slope of 0.45, and a third straight line 913 has a slope of 0.26. is 0.38. When the lower limit straight line 920 has a slope of 0.24, in the case of the first straight line 911, the slope difference (0.26-0.24) with the lower limit straight line 920 is 0.02, which is less than the preset reference value of 0.12, and thus, it is determined that sensor is operated normally. However, in the case of the second straight line 912, the slope difference (0.45-0.24) with the lower limit straight line 920 is 0.21, which is greater than the preset reference value of 0.12, and thus, it is determined that the sensor is operated abnormally, and in the case of the third straight line 913, since the slope difference (0.38-0.24) with the lower limit straight line 920 is 0.14, which is larger than the preset reference value of 0.12, and thus, it is determined that the sensor is operated abnormally. In this way, when dividing the region at each section where a straight line bends, comparing the slope, and determining whether or not the failure occurs, the time when the failure occurs can also be estimated, which can be very useful when it is necessary to check when the failure occurs.

Next, the slopes can be compared by calculating the slope average within a certain period. The slope average of the upper limit straight line 910 in the entire section of FIG. 11 is {(0.24+0.45+0.38)/3} = 0.35, and the difference with the slope average (0.24) of the lower limit straight line 920 is 0.11, which is less than the preset reference value of 0.12, and

EP 4 615 160 A1

thus, it can be determined that the sensor is operated normally. In this way, determining failure by calculating the average slope within a certain period can lower the sensitivity of failure determination because even when there is a temporary slope change, as long as the average value does not exceed the reference value, it is not determined as failure. Therefore, unnecessary failure determination can be prevented.

According to the present disclosure as above, the copper pipe made of copper into which the heating cable such as the electric heating wire is inserted and the copper film formed on the top of the copper pipe are provided inside the tile. Accordingly, it is possible to provide the electric heating tile in which the heat generated by the heating cable is more easily released through the upper surface of the tile.

Additionally, by providing at least one magnetic member on one side surface, it is possible to provide the electric heating tile that is easy to install and maintain through the coupling by the magnet.

In addition, by including the control module that is electrically connected to the electric heating tile, it is possible to provide the electric heating tile that can measure the temperature of the copper pipe and safely control the heating state of the electric heating tile.

Additionally, a method of controlling the electric heating tile according to one embodiment of the present disclosure may be recorded on a computer-readable medium including program instructions for performing various computer-implemented operations. The computer-readable medium may include program instructions, data files, data structures, or the like, singly or in combination. The medium may be one in which program instructions are specifically designed and configured for the present disclosure, or may be known and available to those skilled in the art of computer software. Examples of computer-readable recording media include magnetic media such as hard disks, floppy disks, and magnetic tapes, optical media such as CD-ROMs and DVDs, magneto-optical media such as floptical disks, and hardware devices specifically configured to store and perform program instructions such as ROM, RAM, and flash memory. Examples of program instructions include machine language code, such as that produced by a compiler, as well as high-level language code that can be executed by a computer using an interpreter, or the like.

As described above, although one embodiment of the present disclosure has been described through limited examples and drawings, one embodiment of the present disclosure is not limited to the above-described embodiments, and various modifications and variations can be made from these descriptions by those skilled in the art in the field to which the present disclosure belongs. Therefore, one embodiment of the present disclosure should be understood only by the scope of claims described below, and all equivalent or equivalent modifications thereof will be said to fall within the scope of the present disclosure idea.

## Claims

1.   An electric heating tile comprising:

   a first layer in which a copper pipe is provided;
   a second layer provided on the first layer and patterned with at least one copper film;
   a top cover configured to cover an upper surface of the second layer; and
   a bottom cover configured to cover a lower surface of the first layer,
   wherein in the top cover and the bottom lower cover, at least one magnetic member is attached to one side surface.

2.   The electric heating tile of claim 1, wherein the bottom cover includes a first inlet provided on one side surface, a second inlet provided on the other side surface facing the first inlet, and an insertion member inserted into the first inlet and the second inlet, and
   the insertion member is made of an elastic material and is provided in a tubular shape with a through hole penetrating the inside, and the copper pipe is inserted into the through hole.

3.   The electric heating tile of claim 1, further comprising a control module configured to control a heating state of the copper pipe,
   wherein the control module includes a temperature sensor configured to measure a temperature of the top cover, a power supply unit configured to supply power to a heating cable inserted into the copper pipe, a communication unit configured to receive a user control signal from a predetermined user terminal, and a temperature control unit configured to control a heating temperature of the copper pipe based on the user control signal received from the communication unit.

4.   The electric heating tile of claim 1, wherein the copper pipe of the first layer is made of the same material as that of the copper film of the second layer, and the copper pipe and the copper film are joined by soldering, and

in the bottom cover, a region where the first layer is mounted is coated with epoxy.

5. The electric heating tile of claim 1, further comprising a side surface cover having the same thickness as a combined thickness of the bottom cover and the top cover, including an empty space formed therein, and having at least one through hole on one side surface.

【FIG. 1】

100

130　　　　　　　　　　　　　　　　　　　　　120

110　　　　　　　　　　　　　　140

【FIG. 2】

111

110

【FIG. 3】

【FIG. 4】

111

121

【FIG. 5】

【FIG. 6】

【FIG. 7】

【FIG. 8】

```
┌─────────────────────────────────────────────┐
│                                               │
│   ┌─────────────────────────────────────┐    │
│   │      TEMPERATURE SENSOR             │    │
│   │            (151)                    │    │
│   └─────────────────────────────────────┘    │
│                                               │
│   ┌─────────────────────────────────────┐    │
│   │      POWER SUPPLY UNIT              │    │
│   │            (152)                    │    │
│   └─────────────────────────────────────┘    │
│                                               │
│   ┌─────────────────────────────────────┐    │
│   │      COMMUNICATION UNIT             │    │
│   │            (153)                    │    │
│   └─────────────────────────────────────┘    │
│                                               │
│   ┌─────────────────────────────────────┐    │
│   │   TEMPERATURE CONTROL UNIT          │    │
│   │            (154)                    │    │
│   └─────────────────────────────────────┘    │
│                                               │
└─────────────────────────────────────────────┘
                                          150
```

【FIG. 9】

【FIG. 10】

【FIG. 11】

Europäisches
Patentamt

European
Patent Office

Office européen
des brevets

# EUROPEAN SEARCH REPORT

**Application Number**

EP 24 22 3574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 202 581 515 U (ZHANG TIEFENG) 5 December 2012 (2012-12-05) * figures 1, 2 * * Sections "Technical Field", "Detailed description" * | 1-5 | INV. H05B3/06 H05B3/26 H05B3/28 |
| Y | EP 2 921 084 A1 (MARUDEOHAM INC [KR]) 23 September 2015 (2015-09-23) * abstract; figures 1-3, 8-11 * * paragraphs [0051] - [0059], [0065] - [0088] * | 1-5 | |
| Y | CN 206 648 153 U (TIANJIN FUBAITONG TECH DEVELOPMENT CO LTD) 17 November 2017 (2017-11-17) * figures 1, 2 * * Section "Detailed Description" * | 1-5 | |

TECHNICAL FIELDS
SEARCHED     (IPC)

H05B

The present search report has been drawn up for all claims

| Place of search | Date of completion of the search | Examiner |
|---|---|---|
| Munich | 1 July 2025 | Varelas, Dimitrios |

EPO FORM 1503 03.82 (P04C01)

2

## ANNEX TO THE EUROPEAN SEARCH REPORT
## ON EUROPEAN PATENT APPLICATION NO.

EP 24 22 3574

01-07-2025

| Patent document cited in search report | Publication date | Patent family member(s) | Publication date |
|---|---|---|---|
| CN 202581515 U | 05-12-2012 | NONE | |
| EP 2921084 A1 | 23-09-2015 | EP 2921084 A1<br>US 2016014847 A1<br>WO 2015088115 A1 | 23-09-2015<br>14-01-2016<br>18-06-2015 |
| CN 206648153 U | 17-11-2017 | NONE | |

EPO FORM P0459

## REFERENCES CITED IN THE DESCRIPTION

**Patent documents cited in the description**

- KR 1020150099894